# EUROPEAN PATENT SPECIFICATION

(11) **EP 3 482 336 B1**
(45) Date of publication and mention of the grant of the patent: **08.10.2025**
(21) Application number: 17840037.0
(22) Date of filing: 02.08.2017
(51) Int. Cl.: G06F 21/60, H04L 9/08, G06F 15/173, G06F 21/62

(54) **JURISDICTION INDEPENDENT DATA STORAGE IN A MULTI-VENDOR CLOUD ENVIRONMENT**
GERICHTSBARKEITSUNABHÄNGIGE DATENSPEICHERUNG IN EINER MULTI-VENDOR-CLOUD-UMGEBUNG
STOCKAGE DE DONNÉES INDÉPENDANT DE LA JURIDICTION DANS UN ENVIRONNEMENT EN NUAGE MULTI-FOURNISSEURS

(30) Priority: 02.08.2016 US 201615226237
(43) Date of publication of application: 15.05.2019
(73) Proprietor: Lewis, Paul, Asbury, NJ 08802 (US)
(72) Inventor: Lewis, Paul, Asbury, NJ 08802 (US)
(74) Representative: Dolleymores
(86) International application number: PCT/US2017/045149
(87) International publication number: WO 2018/031342

(56) References cited:
- EP-A1- 2 755 161
- WO-A1-2013/101085
- US-A1- 2003 084 020
- US-A1- 2008 183 975
- US-A1- 2011 107 103
- US-A1- 2015 052 354
- US-A1- 2015 312 243

## Description

### Field of the Embodiments

This invention relates to data protection and security in a cloud based environment. In particular, the invention allows data to be stored in a cloud environment whereby it is inaccessible to any third party and not subject to data privacy laws of any given jurisdiction.

### Background of the Embodiments

With the advent of the internet, cyber security and data privacy is a growing global concern in today's world. Information technology and electronic discovery advances in a variety of industries, including the legal industry have compounded the issue. The United States and many foreign countries have enacted strict and stringent requirements on data privacy and security. Global entities and multinational corporations have struggled to comply with local data privacy laws. Data privacy laws define how companies and individuals must store and manage computer data. However, the laws are complex and sometimes the laws of one jurisdiction are in direct conflict with the laws of another jurisdiction. This has caused companies to give much thought as to how and where it stores their protected data. Because of the evolution of technology, companies are migrating away from managing and storing data internally, and opting instead to store data with a third party. The third party provider provides the physical infrastructure and maintains the data for a large number of customers. This scenario is generally known as the "cloud" or a virtual storage system. Such cloud based systems are used by many companies, but each is maintained by a single cloud service provider or "cloud vendor".

The development of the cloud has introduced many new challenges for companies. Customers are unclear as to what jurisdiction contains their inactive digital data (i.e. data at rest), since a cloud customer does not know where a cloud vendor maintains its actual physical infrastructure. Other challenges involve data security. Cloud environments can be compromised by hackers or by a company's internal employees ultimately leading to an organization's data being accessed or transferred. If the data is sensitive, such as personally identifiable information ("PII"), the company may be required to make a mandatory disclosure to its customers. In some cases, the company is not aware of such an invasion, and thereby may not make the disclosure they are required to make. In addition, a cloud vendor may go offline or go out of business, thereby creating a potential situation where a subscriber cannot access its own data. The present invention solves many of these and other challenges.

US20150312243A1, US20150052354A1 and EP275516A1 describe cloud-based file distribution systems.

The present invention relates to a cloud based system including the creation of a system which causes computer data to be redundant and jurisdiction independent. In the present application, a data file is segmented and encrypted wherein each data file segment is striped across multiple cloud service providers. Thus, in the event each cloud service provider maintains physical storage in a different jurisdiction, then each encrypted segment will be at rest in a different jurisdiction. Therefore, each encrypted segment contains no readable data on its own, and must be reassembled with its other segments before the whole can be decrypted. Only once the segments from different jurisdictions are assembled can it be decrypted and read. The disclosed system enables a data file to be jurisdictionally independent until it is reassembled, and once the data is reassembled will it be able to be governed. The present application enables a company to subscribe to many cloud vendors, and not have to worry about their data at rest. For example, during the legal discovery process, a company can choose the jurisdiction for data production simply by reassembling its data in that jurisdiction.

### Summary of the Embodiments

The invention is defined by the claims.

### Brief Description of the Drawings

Figure 1 shows the preferred embodiment of the system of the invention.
Figure 2 show the preferred method of the invention.
Figure 3 shows a graphical representation of the flow of a data file and data blocks in the system.

### Description of the Preferred Embodiments

The preferred embodiments of the present invention will now be described with reference to the drawings. Identical elements in the various figures are identified with the same reference numerals.

Reference will now be made in detail to each embodiment of the present invention. Such embodiments are provided by way of explanation of the present invention, which is not intended to be limited thereto. In fact, those of ordinary skill in the art may appreciate upon reading the present specification and viewing the present drawings that various modifications and variations can be made thereto.

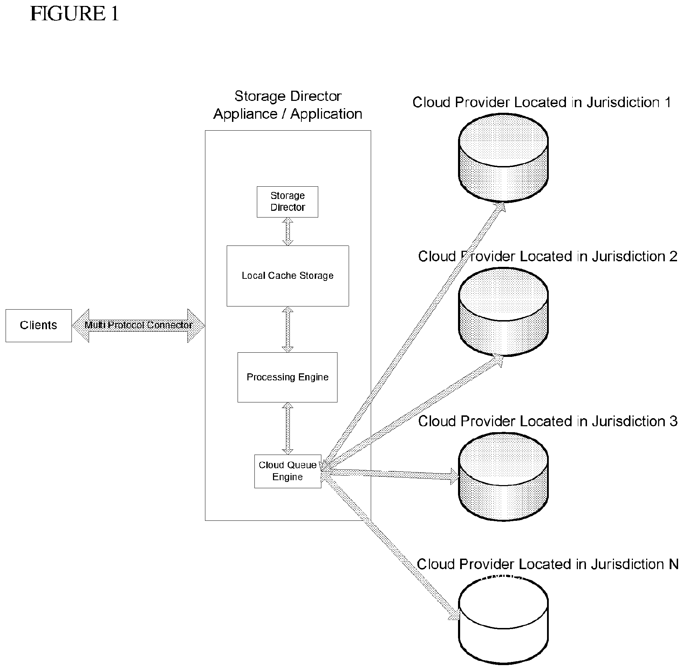

Figure 1 shows the process flow of data through the cloud based system of the present application. The process commences with a native data file, the data file is encrypted and broken into segmented parts, and the segmented data file is then forwarded to multiple cloud storage providers located in multiple jurisdictions. A client (or multiple clients) connects to a Storage Director Appliance or Software Application through a Multi-Protocol Connector. The multi-protocol connector may be via a web browser through the Internet. The Storage Director Appliance or Application has the ability to locally store a cached file in a local cache storage. The file is processed by a processing engine where it is encrypted and separated into "n" parts. Each of the parts are passed on to the Cloud Queue Engine, which transmits and deposits the segmented parts to multiple Cloud Providers located in multiple legal jurisdictions. When the file is requested by an authorized user, The Cloud Queue Engine retrieves a copy of each of "n" parts, downloads them to the Storage Director Appliance or Application, and processes the Segmented parts to re-create the original encrypted file. The encrypted file is decrypted, and the native file becomes available to the user.

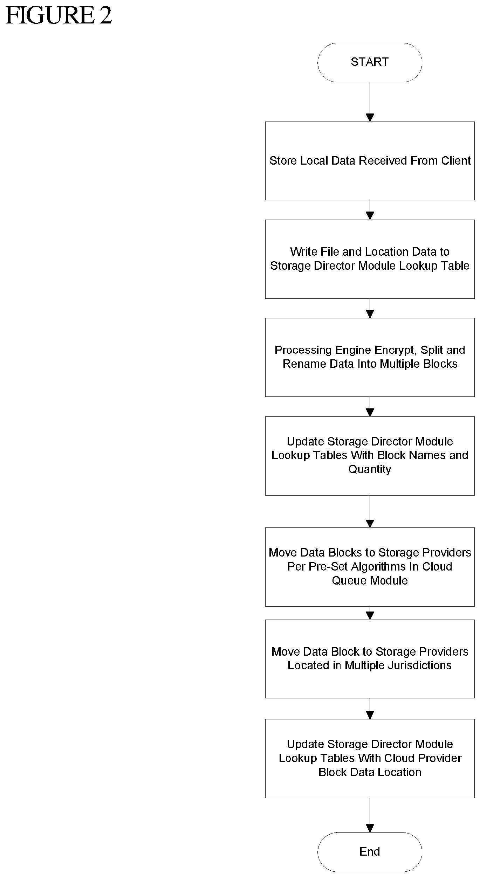

Figure 2 shows a flow chart diagram that describes the process of taking a native file and securely storing it in one of multiple cloud vendors located in more than one jurisdiction. To reassemble the file, the process is simply reversed. In step 1, local or native data is received from a Client and ready for processing. In step 2, the file and location data are written to the Storage Director module Lookup Table. In step 3, the file is processed by the Processing Engine, where it is encrypted. The encrypted file is then broken into multiple data blocks, and each block is assigned a unique name or identifier. In step 4, the Storage Director module Lookup table is updated with the block name of each data block and the total Quantity of blocks that were created from the original encrypted file. In steps 5 the data blocks are Forwarded and moved to storage providers as per a preset algorithm as instructed by the Cloud Queue Engine or Module. In step 6, the blocks are forward and moved to one of multiple cloud storage providers which are located in multiple jurisdictions as instructed by the Cloud Queue Engine or Module. The blocks are stored at cloud providers located in different jurisdictions. In step 7, the Storage Director module lookup table is updated with the data location of each block at each Cloud Provider.

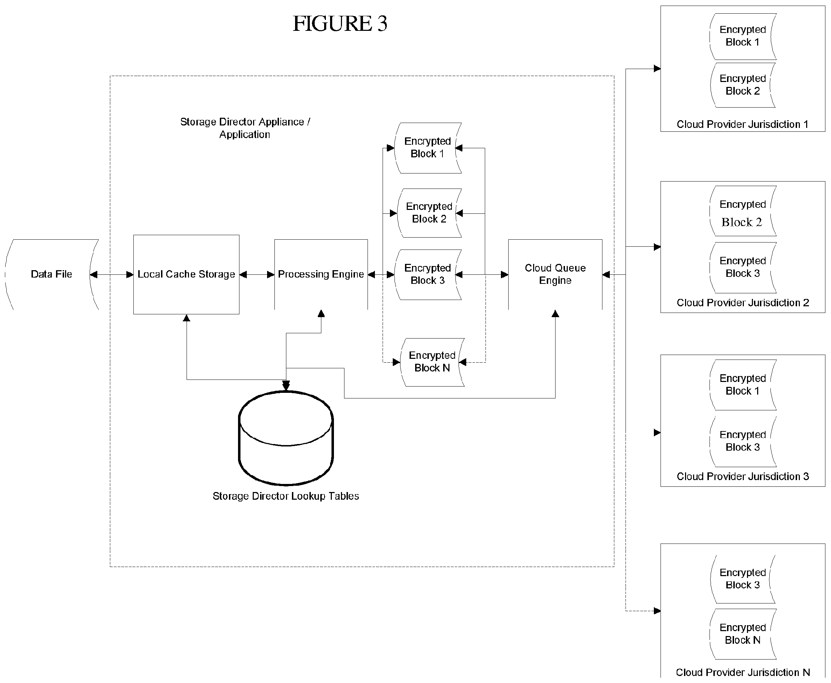

In figure 3 a graphical representation of the data flow is shown. Figure 3 also illustrates how data blocks are securely and redundantly stored across Cloud Providers in "n" jurisdictions. Once a native data file is encrypted and broken into data blocks by the Storage Director Appliance or Application, the Cloud Queue Engine or module distributes the blocks to "n" Cloud Providers in "n" legal jurisdictions. Each data block is written to two or more Cloud Providers, which "stripes" the data across multiple providers in varying jurisdictions. If a given Cloud Provider is compromised by going offline and unavailable, the Cloud Queue Engine can still retrieve the data blocks from another Cloud Provider. In addition, if a given Cloud Provider is compromised by a hacker or unauthorized user, the data blocks that may have been compromised are of no value to the hacker, because the hacker will only be in possession of encrypted blocks, and not any entire file.

The present embodiments relate to a systems and methods for secure data storage in a multi-vendor cloud environment in a manner that prevents the third party cloud provider from being able to access or be in possession of complete data files. The computer or device that creates the source data distributes only a portion of a data file to each of a plurality of cloud storage providers. The source computer or device maintains a lookup table and is able to re-assemble the data. Each storage provider only maintains part of each data file, and therefore is never in possession of any complete data file(s). The source computer or device can retrieve each portion of the file from multiple cloud providers, whereby the portions are re-assembled into the complete data file by using the lookup table. The system allows for large amounts of data to be stored across a plurality of third party cloud storage providers in a manner that prevents any third party from having access to any complete file. The data is distributed globally among a plurality of cloud storage providers. No single cloud provider has access to any complete file, as each file is broken into Encrypted segments or data blocks and only one Data block is sent to each cloud provider. Each cloud provider is in a different physical location across multiple jurisdictions. As a result, the file does not exist at rest in any one jurisdiction, thus is not subject to legal and/or regulatory requirements of any single jurisdiction while it is stored in a multi-vendor cloud environment.

The system ensures that any data file stored in a multi-vendor cloud environment in this manner cannot be subject to the laws governing production of, privacy of, or protection of data in any jurisdiction.

In another embodiment, a system and method for securely sharing data files by using a multi-vendor cloud environment in a manner that prevents any third party from being able to access or be in possession of the original source data file is taught. The computer or device that creates the source data splits each file into multiple segments. Each segment is then encrypted using an encryption key defined by the user. Each of the encrypted fragments are then distributed to multiple cloud properties whereby only a portion of the fragments of the source data file is stored to any one of a plurality of cloud storage providers. The source computer or device maintains a pointer file that contains a lookup table and is able to re-assemble the data if it knows the encryption key and has access to the same cloud properties. Each storage provider only maintains part of each data file, and therefore is never in possession of any complete data file(s). Any computer or device that has possession of the pointer file, knows the encryption key, and has access to the cloud provider storage can retrieve each portion of the file from multiple cloud providers, whereby the portions are downloaded, decrypted using the user generated encryption key stored in the pointer file, and re-assembled into the complete data file by using the lookup table. The system allows for large amounts of data to be stored across a plurality of third party cloud storage providers in a manner that prevents any third party from having access to any complete file. The data is safe from being exploited or hacked by any third party, since even if all cloud providers are breached, the data cannot be re-assembled without the encryption key and the lookup table.

In this embodiment, the method comprises; a source data file is created, the source data file is split into fragments; an encryption key is created by the user; each fragment is encrypted using the encryption key; the fragments are distributed in multiple cloud storage providers, whereby no single cloud storage provider is in possession of all fragments; a pointer file is created that stores the location of each fragment; the pointer file is stored locally, and the original file is deleted. The user is able to open the pointer file, enter the encryption key, and authenticate to the cloud storage providers. Each fragmented is transferred from the cloud storage providers to the local computer. The fragments are re-assembled locally on the computer.

In another embodiment, a system and method for securely sharing data files by using a multi-vendor cloud environment in a manner that prevents any third party from being able to access or be in possession of the original source data file is taught. The computer or device that creates the source data splits each file into multiple segments. Each segment is then encrypted using an encryption key defined by the user. Each of the encrypted fragments are then distributed to multiple cloud properties whereby only a portion of the fragments of the source data file is stored to any one of a plurality of cloud storage providers. The source computer or device maintains a pointer file that contains a lookup table and is able to re-assemble the data if it knows the encryption key and has access to the same cloud properties. The pointer file can be freely shared with other users using any data transmission method, including email, copy/paste, etc. Each storage provider only maintains part of each data file, and therefore is never in possession of any complete data file(s). Any computer or device that has possession of the pointer file, knows the encryption key, and has access to the cloud properties can retrieve each portion of the file from multiple cloud providers, whereby the portions are downloaded, decrypted using the user generated encryption key stored in the pointer file, and locally re-assembled into the complete data file. The system allows for large amounts of data to be stored across a plurality of third party cloud storage providers in a manner that prevents any third party from having access to any complete file, unless the source user shares the pointer file, encryption key, and access to the cloud properties. The data at rest is safe from being exploited or hacked by any third party, since even if all cloud providers are breached, the data cannot be re-assembled without the pointer file, encryption key, and access to a complete set of fragments.

In this embodiment, the method comprises: a source data file is created; the source data file is split into fragments; an encryption key is created by user #1; each fragment is encrypted using the encryption key; the fragments are distributed in multiple cloud storage providers, whereby no single cloud storage provider is in possession of all fragments; a pointer file is created that stores the location of each fragment; the pointer file is stored locally, and the original file is deleted. The pointer file is shared with user #2. User #2 is able to access the fragments stored at the cloud storage providers; User #2 has knowledge of the encryption key; User #2 is able to open the pointer file, enter the encryption key, and authenticate to the cloud storage providers. Each fragmented is transferred from the cloud storage providers to the local computer of user #2. The fragments are re-assembled locally on the computer of user #2.

The advantages and features of the application are of a representative sample of embodiments only, and are not exhaustive and/or exclusive. They are presented only to assist in understanding and teach the claimed principles. It should be understood that they are not representative of all disclosed embodiments. As such, certain aspects of the disclosure have not been discussed herein. That alternate embodiments may not have been presented for a specific portion of the invention or that further undescribed alternate embodiments may be available for a portion is not to be considered a disclaimer of those alternate embodiments. It will be appreciated that many of those undescribed embodiments incorporate the same principles of the invention and others are equivalent. Thus, it is to be understood that other embodiments may be utilized and functional, logical, organizational, structural and/or topological modifications may be made without departing from the scope of the disclosure. As such, all examples and/or embodiments are deemed to be non-limiting throughout this disclosure. Also, no inference should be drawn regarding those embodiments discussed herein relative to those not discussed herein other than it is as such for purposes of reducing space and repetition. For instance, it is to be understood that the logical and/or topological structure of any combination of any program components (a component collection), other components and/or any present feature sets as described in the figures and/or throughout are not limited to a fixed operating order and/or arrangement, but rather, any disclosed order is exemplary and all equivalents, regardless of order, are contemplated by the disclosure. Furthermore, it is to be understood that such features are not limited to serial execution, but rather, any number of threads, processes, services, servers, and/or the like that may execute asynchronously, concurrently, in parallel, simultaneously, synchronously, and/or the like are contemplated by the disclosure. As such, some of these features may be mutually contradictory, in that they cannot be simultaneously present in a single embodiment. Similarly, some features are applicable to one aspect of the invention, and inapplicable to others. In addition, the disclosure includes other inventions not presently claimed. Applicant reserves all rights in those presently unclaimed inventions including the right to claim such inventions, file additional applications, continuations, continuations in part, divisions, and/or the like thereof. As such, it should be understood that advantages, embodiments, examples, functional, features, logical, organizational, structural, topological, and/or other aspects of the disclosure are not to be considered limitations on the disclosure as defined by the claims or limitations on equivalents to the claims. It is to be understood that, depending on the particular needs and/or characteristics of a individual and/or enterprise user, database configuration and/or relational model, data type, data transmission and/or network framework, syntax structure, and/or the like, various embodiments of the system may be implemented that enable a great deal of flexibility and customization.

All statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Descriptions herein of method steps and computer programs represent conceptual embodiments of illustrative circuitry and software embodying the principles of the disclosed embodiments. Thus the functions of the various elements shown and described herein may be provided through the use of dedicated hardware as well as hardware capable of executing software in association with appropriate software as set forth herein.

In the disclosure hereof any element expressed as a means for performing a specified function is intended to encompass any way of performing that function including, for example, a) a combination of circuit elements and associated hardware which perform that function or b) software in any form, including, therefore, firmware, microcode or the like as set forth herein, combined with appropriate circuitry for executing that software to perform the function. Applicants thus regard any means which can provide those functionalities as equivalent to those shown herein.

Similarly, it will be appreciated that the system and process flows described herein represent various processes which may be substantially represented in computer-readable media and so executed by a computer or processor, whether or not such computer or processor is explicitly shown. Moreover, the various processes can be understood as representing not only processing and/or other functions but, alternatively, as blocks of program code that carry out such processing or functions.

The methods, systems, computer programs and mobile devices of the present disclosure, as described above and shown in the drawings, among other things, provide for improved social networking platforms and aspects thereof. It will be apparent to those skilled in the art that various modifications and variations can be made in the devices, methods, software programs and mobile devices of the present disclosure without departing from the scope of the disclosure. Thus, it is intended that the present disclosure include modifications and variations as long as they fall within the scope of the invention as defined by the appended claims.

## Claims

1. A method of securely sharing a data file from a first computer to a second computer by using a multi-vendor cloud environment comprising multiple cloud storage providers, the method comprising the following steps:
storing a data file on the first computer;
splitting, on the first computer, the data file into multiple fragments;
encrypting, on the first computer, each fragment using a user generated encryption key; and
uploading each of the encrypted fragments from the first computer to the multiple cloud storage providers, whereby no single cloud storage provider stores all of the encrypted fragments;
the method being further **characterised by** the following steps:
creating and storing, by the first computer, a pointer file which contains the location of each encrypted fragment within the multi-vendor cloud environment and the user-generated encryption key;
deleting, by the first computer, the data file from the first computer;
sending, by the first computer, the pointer file from the first computer to the second computer;
opening, by the second computer, the pointer file;
downloading, by the second computer, each encrypted fragment from the multiple cloud storage providers to the second computer;
decrypting, by the second computer, the fragments on the second computer using the user-generated encryption key; and
reassembling, by the second computer, the decrypted fragments into the data file.

2. A method as claimed in Claim 1, wherein the pointer file contains a lookup table which contains the location of each encrypted fragment within the multi-vendor cloud environment.

## Patentansprüche

1. Verfahren zum sicheren Teilen einer Datendatei von einem ersten Computer zu einem zweiten Computer unter Verwendung einer Multi-Vendor-Cloud-Umgebung mit mehreren Cloud-Speicheranbietern, wobei das Verfahren die folgenden Schritte umfasst:
Speichern einer Datendatei auf dem ersten Computer;
Aufteilen der Datendatei in mehrere Fragmente auf dem ersten Computer;
Verschlüsseln, auf dem ersten Computer, jedes Fragments mit einem vom Benutzer generierten Verschlüsselungsschlüssel; und
Hochladen jedes der verschlüsselten Fragmente vom ersten Computer zu den mehreren Cloud-Speicheranbietern, wobei kein einzelner Cloud-Speicheranbieter alle der verschlüsselten Fragmente speichert;
Verfahren, das durch die folgenden Schritte ferner gekennzeichnet ist:
Erstellen und Speichern einer Zeigerdatei durch den ersten Computer, die den Speicherort jedes verschlüsselten Fragments innerhalb der Multi-Vendor-Cloud-Umgebung und den nutzererstellten Verschlüsselungsschlüssel enthält;
Löschen, durch den ersten Computer, der Datendatei vom ersten Computer;
Senden, durch den ersten Computer, der Zeigerdatei vom ersten Computer an den zweiten Computer;
Öffnen, durch den zweiten Computer, der Zeigerdatei;
Herunterladen, durch den zweiten Computer, jedes verschlüsselten Fragments von den mehreren Cloud-Speicheranbietern auf den zweiten Computer;
Entschlüsseln, durch den zweiten Computer, der Fragmente auf dem zweiten Computer mithilfe des nutzererstellten Verschlüsselungsschlüssels; und
Reassemblierung, durch den zweiten Computer, der entschlüsselten Fragmentes in die Datendatei.

2. Verfahren nach Anspruch 1, wobei die Zeigerdatei eine Nachschlagetabelle enthält, die den Speicherort jedes verschlüsselten Fragments innerhalb der Multi-Vendor-Cloud-Umgebung enthält.

## Revendications

1. Procédé de partage sécurisé d'un fichier de données d'un premier ordinateur à un deuxième ordinateur en utilisant un environnement infonuagique multifournisseur comportant de multiples fournisseurs de stockage en nuage, le procédé comportant les étapes suivantes consistant à :
stocker un fichier de données sur le premier ordinateur ;
diviser, sur le premier ordinateur, le fichier de données en de multiples fragments ;
chiffrer, sur le premier ordinateur, chaque fragment en utilisant une clé de chiffrement générée par l'utilisateur ; et
téléverser chacun des fragments chiffrés en provenance du premier ordinateur vers les multiples fournisseurs de stockage en nuage, ce par quoi aucun seul fournisseur de stockage en nuage ne stocke la totalité des fragments chiffrés ;
le procédé étant par ailleurs **caractérisé par** les étapes suivantes consistant à :
créer et stocker, par le premier ordinateur, un fichier pointeur qui contient l'emplacement de chaque fragment chiffré dans les limites de l'environnement infonuagique multifournisseur et la clé de chiffrement générée par l'utilisateur ;
supprimer, par le premier ordinateur, le fichier de données du premier ordinateur ;
envoyer, par le premier ordinateur, le fichier pointeur en provenance du premier ordinateur au deuxième ordinateur ;
ouvrir, par le deuxième ordinateur, le fichier pointeur ;
télécharger, par le deuxième ordinateur, chaque fragment chiffré en provenance des multiples fournisseurs de stockage en nuage vers le deuxième ordinateur ;
déchiffrer, par le deuxième ordinateur, les fragments sur le deuxième ordinateur en utilisant la clé de chiffrement générée par l'utilisateur ; et
réassembler, par le deuxième ordinateur, les fragments déchiffrés pour refaire le fichier de données.

2. Procédé selon la revendication 1, dans lequel le fichier pointeur contient une table de consultation qui contient l'emplacement de chaque fragment chiffré dans les limites de l'environnement infonuagique multifournisseur.
